# FASCICULE DE BREVET EUROPEEN

(11) **EP 0 878 353 B1**
(45) Date de publication et mention de la délivrance du brevet: **10.07.2002**
(21) Numéro de dépôt: 98401047.0
(22) Date de dépôt: 29.04.1998
(51) Int. Cl.: B60Q 1/04, F16B 21/07

(54) **Dispositif de pré-fixation d'un dispositif d'éclairage ou de signalisation sur une carrosserie de véhicule automobile**
Vorrichtung zur vorübergehenden Befestigung einer Beleuchtungs- oder Signaleinrichtung auf der Karosserie eines Kraftfahrzeuges
Device for temporarily holding a lighting or signalling device on the body of a motor vehicle

(30) Priorité: 14.05.1997 FR 9705904
(43) Date de publication de la demande: 18.11.1998
(73) Titulaire: VALEO VISION, 93000 Bobigny (FR)
(72) Inventeur: Donaire Cuellar, Juan, c/o Valeo Management Serv., 94017 Créteil (FR)
(74) Mandataire: Le Forestier, Eric

(56) Documents cités:
- EP-A- 0 751 040
- DE-B- 1 098 468
- US-A- 5 443 323
- PATENT ABSTRACTS OF JAPAN vol. 096, no. 008, 30 août 1996 & JP 08 091115 A (DAIHATSU MOTOR CO LTD), 9 avril 1996,

## Description

La présente invention a trait d'une façon générale à la fixation de dispositifs d'éclairage ou de signalisation sur des carrosseries de véhicules automobiles.

Les dispositifs d'éclairage ou de signalisation sont généralement fixés par leur boîtier, à des aménagements de carrosserie de véhicule. Pour ce faire, des moyens sont prévus, qui sont aptes à recevoir des moyens de fixation définitive du boîtier sur la carrosserie, tels que des vis ou des goujons, et des écrous.

Ce montage est une opération fastidieuse car, pour pouvoir réaliser la fixation dans les meilleures conditions, l'opérateur doit avoir les deux mains libres. Tel n'est pas généralement le cas, une main étant le plus souvent occupée à pré-positionner le boîtier et le maintenir en place.

Bien entendu, certains opérateurs ont recours à des moyens de fortune pour pré-positionner le boîtier et ainsi, avoir les mains libres pour l'opération de fixation définitive.

On connaît également des dispositifs de prémontage de projecteurs permettant de libérer les mains de l'opérateur pour la fixation définitive du projecteur dans la carrosserie.

Ainsi le document JP-A-08 091115 décrit des pattes élastiques accrochées dans des ouvertures formées spécialement dans la carrosserie. Toutefois, un tel dispositif connu nécessite un positionnement précis du boîtier dès le prémontage, ce qui est contraignant pour l'opérateur. En outre, il limite fortement les possibilités de mouvement nécessaires pour assurer un montage définitif optimal, en termes de positionnement par rapport à la carrosserie, du projecteur.

Ainsi les dispositifs connus sont à considérer comme faisant partie des moyens de montage eux-mêmes, en particulier parce qu'ils prédéterminent dans une certaine mesure la position finale du projecteur.

La présente a pour but de pallier ces limitations de l'état de l'art.

En d'autres termes, elle a pour but de fournir un boîtier qui est pourvu, dès l'origine, de moyens aptes à permettre, d'une manière extrêmement simple, rapide et fiable, son pré-montage sur le véhicule en évitant qu'il ne se détache de la carrosserie avant sa fixation définitive, tout en laissant au projecteur toutes les libertés de mouvement nécessaires à son positionnement correct par rapport à la carrosserie lors du montage final.

Elle vise également à atteindre ce but à l'aide de moyens simples, peu coûteux et qui ne remettent pas en question les moyens habituels de fabrication du boîtier. Ainsi la présente invention propose un dispositif de pré-fixation d'un dispositif d'éclairage ou de signalisation de véhicule automobile dans une ouverture de réception formée dans la carrosserie du véhicule, tel qu'il est défini dans la revendication 1.

Des aspects préférés du dispositif de fixation selon l'invention sont définis dans les revendications dépendantes 2 à 10.

L'invention propose également un dispositif d'éclairage ou de signalisation pour véhicule automobile tel qu'il est défini dans la revendication 11.

Un aspect préféré mais optionnel de ce dispositif d'éclairage ou de signalisation figure dans la revendication 12.

D'autres aspects, buts et avantages de la présente invention apparaîtront mieux à la lecture de la description détaillée suivante d'une forme de réalisation préférée de celle-ci, donnée à titre d'exemple et faite en référence au dessin annexé, sur lequel :
la figure 1 est une vue en perspective d'un dispositif de pré-montage selon l'invention, avant montage,
la figure 2 est une vue en perspective du dispositif de la figure 1, à l'état monté,
la figure 3 est une vue de face d'un élément du dispositif de pré-montage, prévu sur le boîtier d'un projecteur,
la figure 4 est une vue en coupe selon les flèches F-F de l'élément de la figure 3, et
la figure 5 est une vue en coupe selon les flèches V-V de l'élément de la figure 3.

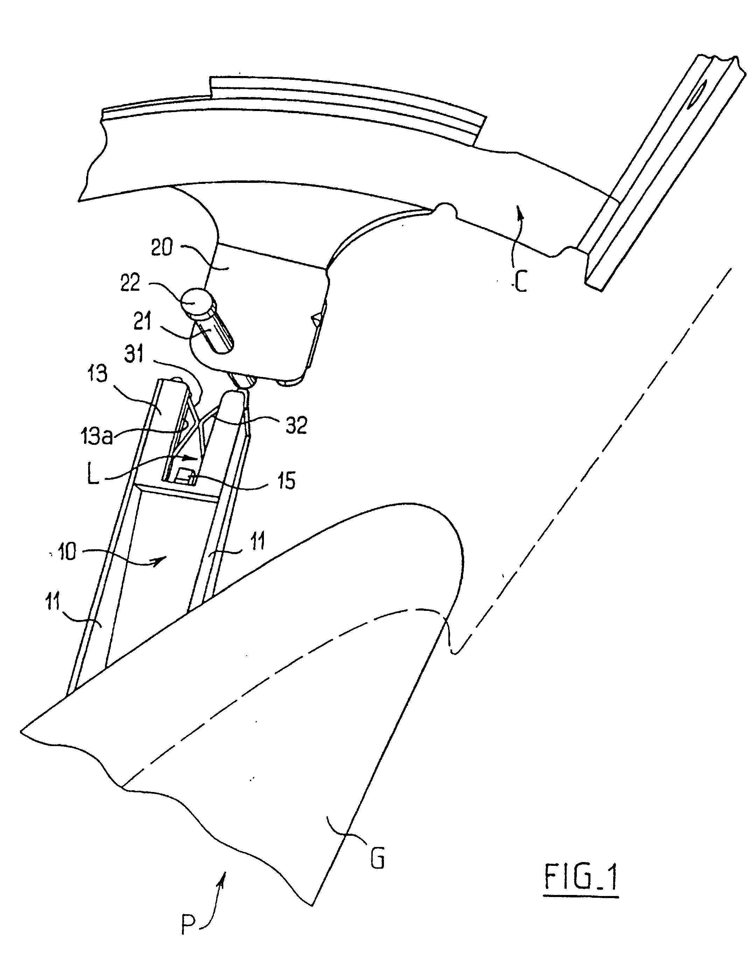

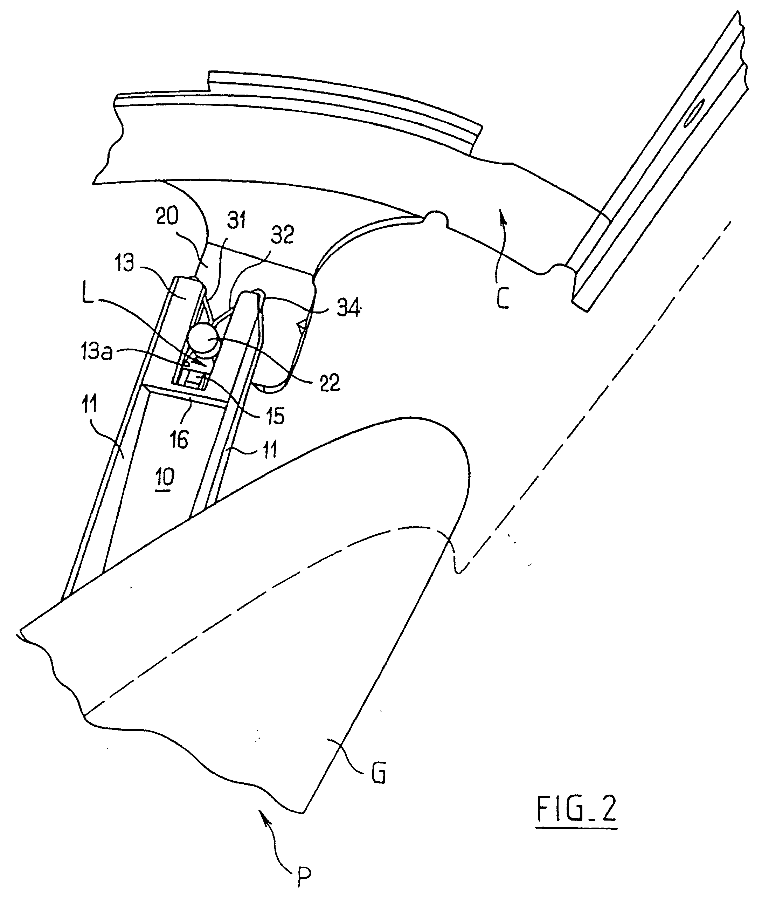

En référence maintenant aux figures, on a représenté sur les figures 1 et 2 une partie d'un projecteur P de véhicule automobile, et plus particulièrement de sa glace frontale G.

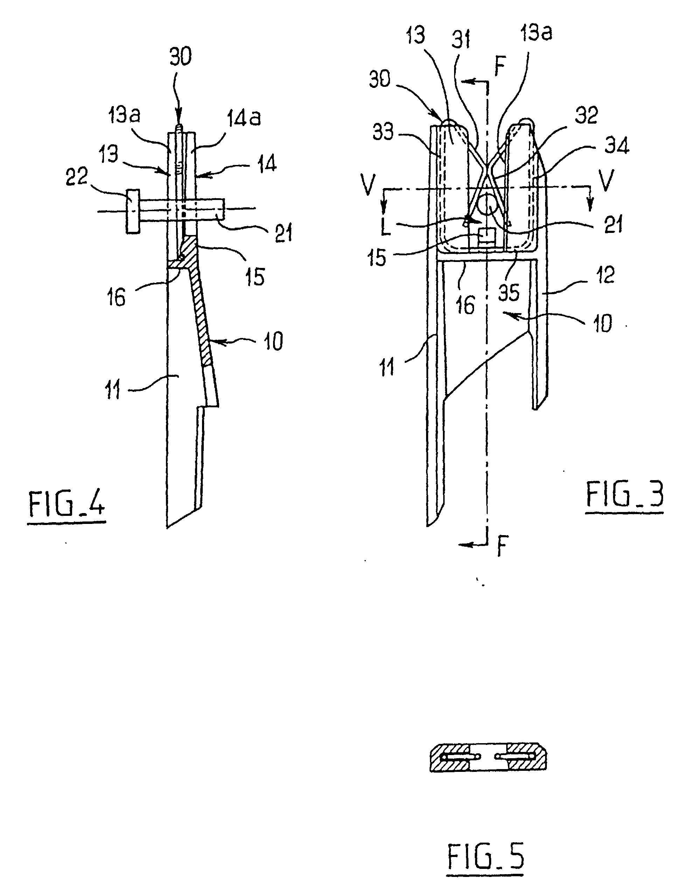

A partir du boîtier (non visible) du projecteur s'étend, généralement vers l'arrière, une patte de pré-montage 10, illustrée en détail sur les figures 3 à 5, comportant une âme centrale généralement plate rigidifiée à l'aide de deux membrures latérales 11, 11 essentiellement verticales.

A l'extrémité postérieure, libre, de cette patte est formée, d'un seul tenant, une cavité définie par deux parois horizontales superposées 13 et 14 (voir en particulier figure 4) et par un fond 16. Chacune de ces parois 13, 14 possède une encoche, respectivement 13a, 14a, de forme essentiellement rectangulaire, débouchant à l'extrémité postérieure libre de la paroi concernée. Ces deux encoches, dont on peut observer qu'elles sont légèrement évasées vers leur extrémité ouverte, sont de même taille et superposées.

La cavité, d'épaisseur prédéterminée essentiellement constante, est délimitée d'une part par les parois 13, 14, de seconde part par les prolongements des membrures latérales 11, 11, et de troisième part par la paroi de fond 16.

Un élément formant pince élastique 30 est réalisé sous forme d'un fil en acier à ressort, de diamètre légèrement inférieur à l'épaisseur de la cavité précitée, plié selon une configuration qui va maintenant être décrite.

L'élément 30 possède deux branches intérieures en vis-à-vis 31, 32, en forme générale de "V" à sommet arrondi et à angle au sommet obtus, ces deux branches pointant l'une vers l'autre et leurs sommets étant, au repos, en appui l'un contre l'autre. A l'une des extrémités de ces branches, le fil se prolonge par un pliage à environ 135° en deux branches extérieures 33, 34, rectilignes et parallèles entre elles, dont la distance hors-tout est légèrement inférieure à la largeur de la cavité définie dans la patte 10, et dont la longueur est très légèrement supérieure à la longueur de cette même cavité.

Enfin l'élément 30 possède une branche de base 35 qui réunit les branches extérieures 33, 34 à leurs extrémités opposées à leur réunion avec les branches intérieures 31, 32, et qui s'étend perpendiculairement auxdites branches extérieures.

Ainsi l'élément formant pince élastique 30 peut être mis en place dans la cavité de la patte 10, de la façon illustrée sur les figures, de telle sorte que les deux branches intérieures 33, 34, qui forment la pince élastique proprement-dite, s'engagent dans le vide laissé par les encoches 13a, 14a, en y définissant un étranglement élastiquement expansible qui donne accès à un logement L défini au fond des encoches.

On observe en particulier sur les figures 3 et 4 que l'élément 10 possède, au niveau de la paroi 14 et de façon adjacente à la paroi de fond 16, une dent 15 qui fait saillie sur une courte distance en direction de la paroi 13. Cette dent a pour objet d'immobiliser l'élément ressort 30 dans sa cavité, la mise en place dudit élément ressort dans ladite cavité se terminant par un encliquetage de la branche 25 entre ladite dent 15 et la paroi opposée 13.

Le dispositif de pré-montage de l'invention comporte en outre, côté carrosserie C, une aile ou languette 20 réalisée d'un seul tenant avec la carrosserie et obtenue par pliage d'un appendice formé sur l'élément de carrosserie concerné.

Dans cette aile 20 est pratiqué un orifice (non visible) par lequel un pion 21 cylindrique est fixé, par exemple par boulonnage ou rivetage. Ce pion 21 présente un diamètre légèrement inférieur à la largeur minimale des encoches 13a, 14a de la patte 10, et une hauteur supérieure à l'épaisseur de la patte 10 au niveau de ses parois terminales 13, 14.

Le pion 21 se termine par une tête plus large 22.

Avantageusement, l'axe longitudinal de la patte 10 et l'axe des encoches 13a, 14a s'étendent dans une direction sensiblement parallèle à la direction de pré-montage du projecteur P, c'est-à-dire à la direction selon laquelle il est introduit dans son ouverture de réception formée dans la carrosserie à l'avant du véhicule. Préférentiellement, cette direction est essentiellement horizontale.

En outre, la patte 10 et le pion 21 sont positionnés de telle sorte que, lorsque le projecteur arrive en fin de course de cette opération de pré-montage (voir figure 1), le pion 21 s'engage dans la pince définie par les encoches 13a, 14a et part les branches 31 et 32, pour franchir - avec déformation élastique temporaire - l'étranglement défini par lesdites branches et se retrouver emprisonné dans le logement L.

Dans cette position, illustrée sur la figure 2, le projecteur P est stabilisé dans son logement, et peut être libéré par l'opérateur qui va alors pouvoir mettre en oeuvre les moyens de fixation définitive, éventuellement réglable, du projecteur P sur la carrosserie.

Ces moyens, non représentés, peuvent être d'un type connu quelconque.

On notera ici qu'avec les moyens de pré-fixation tels que décrits plus haut, le projecteur est retenu dans une direction essentiellement horizontale et est soutenu verticalement, à l'extrémité libre de la patte 10, par la partie de carrosserie 20. Naturellement, on fait en sorte que la région avant du projecteur soit également soutenue, par exemple au niveau des moyens de fixation définitive, pour lui conserver une position stable pendant toutes les opérations liées à sa fixation définitive.

Selon une variante de réalisation, non représentée, on peut prévoir que la ou les pinces équipant le boîtier du projecteur, de même que le ou les pions associés, possèdent toute autre orientation, permettant notamment de retenir le projecteur également en direction verticale. Dans ce cas, on prévoit que l'élément ressort 30 présente la rigidité suffisante pour soutenir effectivement le poids du projecteur.

## Revendications

1. Dispositif de pré-fixation d'un dispositif d'éclairage ou de signalisation (P) de véhicule automobile dans une ouverture de réception formée dans la carrosserie (C) du véhicule, **caractérisé en ce qu'**il comprend
- au moins une pince élastique (31, 32) formée sur un aménagement du dispositif d'éclairage ou de signalisation, ladite pince élastique possédant au moins une branche définissant un étranglement expansible élastiquement et délimitant un logement (L), et
- au moins un organe en saillie (21) fixable sur la carrosserie du véhicule et apte à être engagé à travers ladite pince et immobilisé par celle-ci dans ledit logement.

2. Dispositif selon la revendication 1, **caractérisé en ce que** la ou chaque pince élastique comporte deux branches non rectilignes (31, 32) en vis-à-vis.

3. Dispositif selon la revendication 2, **caractérisé en ce que** les deux branches élastiques (31, 32) appartiennent à un même élément élastique (30).

4. Dispositif selon la revendication 3, **caractérisé en ce que** ledit élément élastique (30) est logé dans une cavité définie à l'extrémité libre d'un aménagement en saillie (10) réalisé d'un seul tenant avec un boîtier du dispositif d'éclairage ou de signalisation (P).

5. Dispositif selon la revendication 4, **caractérisé en ce que** ladite cavité est délimitée par au moins une paroi (13, 14) formant guide pour ledit organe en saillie (21).

6. Dispositif selon la revendication 5, **caractérisé en ce que** ladite cavité est délimitée par deux parois (13, 14) espacées d'une distance légèrement supérieure à l'épaisseur dudit élément élastique (30) et comportant chacune une encoche (13a, 14a) de guidage dudit organe en saillie (21).

7. Dispositif selon les revendications 4 à 6 prises en combinaison, **caractérisé en ce que** ledit aménagement comporte une dent (15) apte à retenir l'élément élastique (30) dans la cavité par encliquetage de l'une des branches (35) de l'élément élastique entre ladite dent et l'une (13) desdites parois.

8. Dispositif selon l'une des revendications 1 à 7, **caractérisé en ce que** ladite pince élastique définit un passage d'introduction dudit organe en saillie (21) dont la direction est essentiellement parallèle à une direction d'introduction du dispositif d'éclairage ou de signalisation dans son ouverture.

9. Dispositif selon la revendication 8, **caractérisé en ce que** lesdites directions sont essentiellement horizontales.

10. Dispositif selon l'une des revendications 1 à 9, **caractérisé en ce que** ledit organe en saillie est constitué par un pion (21) délimité à une extrémité par une patte (20) de la carrosserie à laquelle il est fixé et à l'autre extrémité par un élargissement (22).

11. Dispositif d'éclairage ou de signalisation pour véhicule automobile, comprenant un boîtier possédant des moyens de fixation sur la carrosserie du véhicule, **caractérisé en ce qu'**il comprend en outre au moins un dispositif de pré-fixation tel que défini dans l'une des revendications précédentes, la ou chaque pince étant indépendante desdits moyens de fixation et étant apte à assurer, à l'aide d'un aménagement prévu en saillie sur la carrosserie, un prémontage du dispositif en vue de la mise en oeuvre subséquente desdits moyens de fixation.

12. Dispositif d'éclairage ou de signalisation selon la revendication 11, **caractérisé en ce que** ladite pince élastique comporte deux branches s'étendant dans un plan horizontal dans une région postérieure du dispositif d'éclairage ou de signalisation et **en ce que** la pré-fixation est assurée également par un soutien du dispositif d'éclairage ou de signalisation au niveau desdits moyens de fixation.

## Patentansprüche

1. Vorrichtung zur vorläufigen Befestigung einer Kraftfahrzeugbeleuchtungs- oder -signalgebungsvorrichtung (P) in einer Aufnahmeöffnung der Fahrzeugkarosserie (C),
**dadurch gekennzeichnet, dass** sie umfasst:
- wenigstens eine elastische Klemme (31, 32), die an einer Einrichtung der Beleuchtungs- oder Signalgebungsvorrichtung ausgebildet ist, wobei diese elastische Klemme wenigstens einen Arm besitzt, der eine elastisch dehnbare Verengung bildet and eine Aufnahme (L) begrenzt, und
- wenigstens ein auf der Fahrzeugkarosserie befestigbares vorstehendes Bauteil (21), das durch diese Klemme hindurchgesteckt and von dieser in der Aufnahme fixiert werden kann.

2. Vorrichtung nach Anspruch 1,
**dadurch gekennzeichnet, dass** die bzw. jede elastische Klemme zwei sich gegenüberliegende, nicht geradlinige Arme (31, 32) umfasst.

3. Vorrichtung nach Anspruch 2,
**dadurch gekennzeichnet, dass** die zwei elastischen Arme (31, 32) ein und demselben elastischen Element (30) zugehörig sind.

4. Vorrichtung nach Anspruch 3,
**dadurch gekennzeichnet, dass** das elastische Element (30) in einer Vertiefung gelagert ist, die am freien Ende einer einstückig mit einem Gehäuse der Beleuchtungs- oder Signalgebungsvorrichtung (P) ausgeführten vorstehenden Einrichtung (10) ausgebildet ist.

5. Vorrichtung nach Anspruch 4,
**dadurch gekennzeichnet, dass** die Vertiefung von wenigstens einer Wandung (13, 14) begrenzt ist, die für das vorstehende Bauteil (21) eine Führung bildet.

6. Vorrichtung nach Anspruch 5,
**dadurch gekennzeichnet, dass** diese Vertiefung von zwei Wandungen (13, 14) begrenzt ist, deren Abstand voneinander etwas größer ist als die Dicke des elastischen Elements (30) und die jeweils eine Aussparung (13a, 14a) zur Führung des vorstehenden Bauteils (21) aufweisen.

7. Vorrichtung nach Anspruch 4 bis 6 in Kombination,
**dadurch gekennzeichnet, dass** die Einrichtung einen Zacken (15) umfasst, der das elastische Element (30) in der Vertiefung dadurch zu halten vermag, dass einer der Arme (35) des elastischen Elements zwischen dem Zacken und einer (13) der Wandungen einrastet.

8. Vorrichtung nach einem der Ansprüche 1 bis 7,
**dadurch gekennzeichnet, dass** die elastische Klemme einen Durchlass zum Einführen des vorstehenden Bauteils (21) bildet, der im wesentlichen parallel zu einer Einführungsrichtung der Beleuchtungs- oder Signalgebungsvorrichtung in ihre Öffnung verläuft.

9. Vorrichtung nach Anspruch 8,
**dadurch gekennzeichnet, dass** die genannten Richtungen im wesentlichen horizontal sind.

10. Vorrichtung nach einem der Ansprüche 1 bis 9,
**dadurch gekennzeichnet, dass** das vorstehende Bauteil durch ein Metallstück (21) gebildet ist, das an einem Ende von einer Pratze (20) der Karosserie begrenzt ist, an dem es befestigt ist, und am anderen Ende von einer Verdickung (22).

11. Beleuchtungs- oder Signalgebungsvorrichtung für Kraftfahrzeuge mit einem Gehäuse, das Mittel zur Befestigung an der Fahrzeugkarosserie besitzt,
**dadurch gekennzeichnet, dass** sie ferner wenigstens eine Vorrichtung zur vorläufigen Befestigung umfasst, wie in einem der vorstehenden Ansprüche beschrieben, wobei die bzw. jede Klemme von diesen Befestigungsmitteln unabhängig ist und mit Hilfe einer an der Karosserie vorstehend vorgesehenen Einrichtung eine vorläufige Montage der Vorrichtung zu gewährleisten vermag, um anschließend die Befestigungsmittel anzubringen.

12. Beleuchtungs- oder Signalgebungsvorrichtung nach Anspruch 11,
**dadurch gekennzeichnet, dass** die elastische Klemme zwei Arme umfasst, die sich in einer horizontalen Ebene in einen hinteren Bereich der Beleuchtungs- oder Signalgebungsvorrichtung erstrecken, und dass die vorläufige Befestigung auch durch ein Stützen der Beleuchtungs- oder Signalgebungsvorrichtung in Höhe dieser Befestigungsmittel gewährleistet ist.

## Claims

1. Device for pre-fixing a lighting or signalling device (P) on a motor vehicle in a reception opening formed in the bodywork (C) of the vehicle, **characterised in that** it comprises:
- at least one elastic clamp (31, 32) formed on an arrangement of the lighting or signalling device, the said elastic clamp having at least one leg defining an elastically expandable throat and delimiting a housing (L), and
- at least one projecting member (21) which can be fixed to the vehicle bodywork and able to be engaged through the said clamp and immobilised by it in the said housing.

2. Device according to Claim 1, **characterised in that** the elastic clamp or clamps have two non-rectilinear legs (31, 32) opposite each other.

3. Device according to Claim 2, **characterised in that** the two elastic legs (31, 32) belong to the same elastic element (30).

4. Device according to Claim 3, **characterised in that** said elastic element (30) is housed in a cavity defined at the free end of a projecting arrangement (10) produced in a single piece with a housing of the lighting or signalling device (P).

5. Device according to Claim 4, **characterised in that** the said cavity is delimited by at least one wall (13, 14) forming a guide for the said projecting member (21).

6. Device according to Claim 5, **characterised in that** said cavity is delimited by two walls (13, 14) spaced apart by a distance slightly greater than the thickness of the said elastic element (30) and each having a notch (13a, 14a) for guiding the said projecting member (21).

7. Device according to Claims 4 to 6 taken in combination, **characterised in that** the said arrangement includes a tooth (15) able to hold the elastic element (30) in the cavity by snapping-in of one of the legs (35) of the elastic element between the said tooth and one (13) of the said walls.

8. Device according to one of Claims 1 to 7, **characterised in that** the said elastic clamp defines a passage for inserting the said projecting member (21) whose direction is essentially parallel to a direction of insertion of the lighting or signalling device in its opening.

9. Device according to Claim 8, **characterised in that** the said directions are essentially horizontal.

10. Device according to one of Claims 1 to 9, **characterised in that** the said projecting member consists of a pin (21) delimited at one end by a lug (20) on the bodywork to which it is fixed and at the other end by a broadening (22).

11. Lighting or signalling device for a motor vehicle, comprising a housing having means of fixing on the vehicle bodywork, **characterised in that** it also comprises at least one temporary fixing device as defined in one of the preceding claims, the clamp or clamps being independent of the said fixing means and being able to provide, by means of an arrangement provided projecting on the bodywork, a temporary mounting of the device with a view to the subsequent use of the said fixing means.

12. Lighting or signalling device according to Claim 11, **characterised in that** the said elastic clamp has two legs extending in a horizontal plane in a rear region of the lighting or signalling device and **in that** the temporary fixing is provided also by a supporting of the lighting or signalling device at the said fixing means.
